(19)

Europäisches
Patentamt
European
Patent Office
Office européen
des brevets

(11) **EP 4 561 006 A1**

(12) **EUROPEAN PATENT APPLICATION**

(43) Date of publication:
**28.05.2025 Bulletin 2025/22**

(21) Application number: 24212394.1

(22) Date of filing: **12.11.2024**

(51) International Patent Classification (IPC):
*H04L 41/16* (2022.01)        *H04L 43/026* (2022.01)
*H04L 43/065* (2022.01)        *H04L 43/0876* (2022.01)

(52) Cooperative Patent Classification (CPC):
**H04L 43/026; H04L 41/16;** H04L 43/065;
H04L 43/0876

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.11.2023 FI 20236293**

(71) Applicant: **Nokia Solutions and Networks Oy
02610 Espoo (FI)**

(72) Inventors:
• **DIERICKX, Philippe**
  **Saint-Gery (BE)**
• **DUPUIS, Nicolas**
  **Chaudfontaine (BE)**
• **VAN DAMME, Axel**
  **Loyers (BE)**
• **DELABY, Olivier**
  **Loyers (BE)**

(74) Representative: **Nokia EPO representatives
Nokia Technologies Oy
Karakaari 7
02610 Espoo (FI)**

(54) **METHOD FOR DETERMINING A SERVICE USED AT A NODE OF COMMUNICATION NETWORK, DURING A PERIOD OF INTEREST**

(57)    A method of determining a service used by a communications network node during a given time period. The method comprises selecting the period of interest from a larger period comprising a plurality of sub-periods, and then determining at least one service in use using a service determination model. This model uses several inputs, including upstream and downstream traffic volumes during the period of interest, as well as traffic volumes for each sub-period preceding the period of interest. The service determination model is a trained model that uses machine learning techniques to predict the sequences of services used. This model is trained to determine at least one target service used during a specific training period. Using this method, it is possible to determine the services used by a communication network node during a given period.

EP 4 561 006 A1

## Description

## Field of the invention

The disclosure relates to apparatuses and methods for determining a service used at a node of communication network.

In particular, the disclosure relates to apparatuses and methods for recognizing and quantifying various types of services from an aggregated volume of traffic.

## Background

The widespread adoption of smartphones, tablets, smart TVs and other IoT devices with the resulting growth has been remarkable. More and more devices at home are connected to run more and more services though the network, triggering a growing need for higher bandwidth with a high reliability.

To supply these requirements, fiber technologies (PON) or wireless access networks keep upgrading their offered capacity. However, these technologies are based on a shared capacity and, it has been confirmed that, based on an average dimensioning, congestion issues are more and more impacting the various services. This results in direct quality of experience (QoE) issues, for instance via perceived lags while gaming, in image freeze during video sessions or even via the induction of PPPoE session loss occurring inter-subscribers.

Various solutions to improve the capacity sharing within the medium, to increase some fairness or simply to take decisions on better dimensioning/technology upgrade exists.

Those solutions however, in order to be accurate, usually require to adapt or be configured according to the on-going usage. For instance, reducing the latency is usually chosen while gaming, but this could be at the cost of an increased sensitivity to issues. Also, heavy downloaders would steer most of the capacity, in some conditions limiting the capacity/QoE of other subscribers. There would be an option to limit their capacity therefore. Video-over-the-Top services (e.g. Netflix), during their initial buffering or while re-buffering, would also behave like downloading. However, limiting the bandwidth in this case would lead to adaptations of the (Video-over-the-Top services e.g. Netflix) service, for instance in some cases leading to reduced service quality and therefore experience.

Over time, profiling users and tracking activities have been topics of interest, for analytics, for quality of service optimization, for troubleshooting, for network planning or for any decision making.

For that purpose, various means exists, with major differences with our present invention.

Deep Packet Inspection

Packet Inspection or Deep Packet Inspection is based on the capture, the processing and the decoding of, at least, the headers of every packets. Every packet passing through an interface is therefore processed and an exact insights about the on-going usage is therefore provided.

Even if the method is valuable, it comes with various drawbacks:

- Privacy issues: by processing and/or decoding at least the header of every packet, there is actually an intrusion in terms of privacy. Indeed, at such level, the IP addresses of the emitter and receiver is known, the nature of the service in-use too, up-to even the content of it. In order to be able to use this method, due to regulatory affairs, such method is not usually allowed without the explicit consent of authors or end-users. Also, in some cases, it cannot be massively performed.

- Scalability issues: due to amount of involved data (fiber connection produce today typically an amount of 1GBytes/s), the amount of packets to process per second and the resulting cumulative volume of data to potentially process is huge. As such, only dedicated hardware at the edge could enable this processing at scale in production, hence limiting its application (not feasible for instance at the Gateway WAN interface). Needless to say that, due to the high volume of data to process, this method requires a high amount of processing power with the associated costs.

- It requires "Internet Mapping": To provide accurate insights about the sniffed packets, there is a need to link each IP/port to a specific service provider. Typically, these packets gets enriched with additional context data. For example, through the access of the Nokia DeepField Genome database which:

    ◦ Maps and tracks more than 4 billion IPv4 and 1 billion IPv6 endpoints
    ◦ Maintains hundreds of thousands of DNS mappings
    ◦ Crawls more than 1 billion internet IP addresses daily

- Keeps track of the most relevant (150-200 million) IP addresses for internet content, applications and services and tags them against CDNs, servers and hosting companies

For sure such method would provide very accurate packet classification but also needs a lot of processing power and efforts to build such huge packet enrichment database.

Upper-layer/App profiling

Some applications intend to process their own traffic data. Such cases require an explicit setup from the client/server, hence an explicit agreement from the end-user. Usually, these applications however could only process their specific traffic data and do not offer a view on the traffic generated by other services or applications.

Per-device profiling

Solution working at the Gateway level intends to process generated traffic in the LAN domain. Some of these approaches actually are able to return a traffic generated by home devices. Even if helpful in some cases, this prevents to efficiently separate different nature of service traces originating from the same device. For instance, if such is made per-laptop, it is separating this traffic from the television, but is for instance not able to distinguish browsing, downloading, video streaming, etc. occurring on this laptop.

Clustering

Clustering method have been proposed in order to, statistically, isolate, separate and/or recognize some different nature of activities from aggregated traffic. Major drawbacks and reasons to not proceed further with the method were actually its large inaccuracies and inability to separate and/or distinguish various families of services.

Through this illustration, but also for troubleshooting and reporting, there always have been a solid interests in detecting, recognizing, separating and quantifying the various types of services that are in-use, over time, for a given internet subscriber.

Thus, there is a need for apparatuses and methods for determining a service used at a node of communication network.

**Summary**

Apparatuses and methods for determining a service used at a node of communication network are disclosed.

In some embodiments, the disclosure provides a method for for determining a service used at a node of communication network, during a period of interest, the method comprising the steps of:

- Selecting the period of interest within a collecting period,

    wherein the collecting period comprises a plurality of sub-periods,
    wherein the period of interest consisting of at least one of said sub-periods;

- Determining at least one service used at the node, during the period of interest, by implementing a service determination model on a plurality of inputs, the plurality of inputs comprising:

    a downstream traffic volume received by the node during the period of interest and
    an upstream traffic volume sent by the node during the period of interest;
    p downstream traffic volumes received by the node during each of p sub-periods preceding the period of interest and p upstream traffic volumes sent by the node
    during said each of p sub-periods preceding the period of interest;

wherein p is a positive integer number;

    the service determination model being a trained model comprising at least one machine learning sequence-to-sequence prediction model,
    wherein the service determination model has been trained to determine at least one target service used at the node during a training period of interest.

Thanks to these features, the method allows detecting, recognizing, separating and quantifying the various types of services that are in-use, over time, for a given internet subscriber, and by extension for any node of communication network. In addition, the method allows preserving privacy of the services used: only the type of services is recognized but not the exact content exchanged.

In addition, the method is medium or technology agnostic and can be implemented at any node exchanging traffic volume with any communication medium or technology as the method only needs the volume of upstream and downstream traffic passing through the node.

In the real-time mode, the service determination model only requires downstream traffic volume and upstream traffic volume exchanged at the node during a determined past period compared to a period of interest to be able to classify downstream traffic volume received during this period of interest.

At last, the method can be implemented at different time granularity depending on the length of the subperiods.

For example, a length of the collecting period is between 1 hour and 6 hours, for example 2 or 4 hours; and/or a length of a sub-period of the collecting period is between 5 seconds to 20 minutes, for example 30 seconds, 5 minutes or 10 minutes.

This method may also comprise one or more of the following features.

In an embodiment, the service determination model has been trained to determine at least one target service used at the node during a training period of interest by classifying and/or quantifying a training downstream traffic volume received at the node during the training period of interest.

In an embodiment, the service determination model has been trained to determine at least one target service used at the node during a training period of interest by classifying and/or quantifying a training downstream traffic volume received at the node during the training period of interest and a training upstream traffic volume sent from by the node during the training period of interest.

In an embodiment, the service determination model is a trained model comprising at least one Compact Convolutional Transformer.

Thanks to these features, any sequence-to-sequence prediction model can be used but it has been noticed that Compact Convolutional Transformer lead to more accurate results but also limit the model size and training time and still reach the best performance, i.e. accuracies.

In an embodiment, the plurality of inputs further comprises a service request designating a service useable at the node, and determining the at least one service used at the node comprises outputting an indication of use of the service designated in the service request; wherein the at least one target service is a designated target service designated in a training service request.

According to this use case, for each interval, the method allows detecting if one specific service is used (binary classification).

In an embodiment, determining the at least one service used at the node comprises determining a main service ; the main service being a service generating a highest traffic among a plurality of services useable at the node; wherein the at least one target service is a main target service used at the node during the training period of interest.

According to this use case, for each interval, the method allows detecting which service is mainly present, e.g., the service consuming the highest bitrate (multi-class classification).

In an embodiment, determining the at least one service used at the node comprises determining a plurality of services used at the node, wherein the at least one target service comprises a plurality of target services used at the node during the training period of interest.

According to this use case, for each interval, the method allows detecting which services are present (multi-label classification).

In an embodiment, determining the at least one service used at the node further comprises outputting an indication of traffic volume generated by each service of the plurality of services, the service determination model being trained to determine the traffic volume generated by each target service of the plurality of target services used at the node during the training period of interest.

According to this use case, for each interval, the method allows quantifying which services are used (multi-target regression).

This method may also comprise one or more of the following features.

In an embodiment, the plurality of inputs further comprises:

f downstream traffic volumes received by the node during each of f sub-periods following the period of interest and f upstream traffic volumes sent by the node during said each of f sub-periods following the period of interest; wherein f is a positive integer number.

In the non-real-time mode, the service determination model also takes as inputs downstream traffic volume and upstream traffic volume exchanged at the node during a determined future period compared to a period of interest to be able to classify downstream traffic volume and upstream traffic exchanged during this period of interest.

In an embodiment, the service determination model has been trained to determine the at least one target service used at the node, for a plurality of training periods of interest, based on a plurality of training inputs; wherein, for a first of two parts of the plurality of training periods of interest, the plurality of training inputs comprises:

> p training downstream traffic volumes received by the node during each of p training sub-periods preceding the training periods of interest of the first part of the plurality of training periods of interest and p upstream traffic volumes sent by the node during said each of p training sub-periods preceding the training periods of interest of the first part of the plurality of training periods of interest;
> f training downstream traffic volumes received by the node during each of f training sub-periods following the training periods of interest of the first part of the plurality of training periods of interest and f upstream traffic volumes sent by the node during said each of p training sub-periods following the training periods of interest of the first part of the plurality of training periods of interest;
> wherein, for a second of the two parts of the plurality of training period of interest, the plurality of training inputs only comprises:

> > training downstream traffic volume and training upstream traffic volume received and sent during the number p of training sub-periods, each one of the p training sub-periods preceding the training periods of interest of the second part of the plurality of training periods of interest; wherein the period of interest is equal in length to the training period of interest.

In the hybrid training mode, the service determination model is trained to be able to classify in real-time mode and in non-real-time mode. In addition, it was found that thanks the processed examples in non-real-time, the hybrid model has better performances in real-time as having half of the examples with the future is somehow helping when the future is not present (real-time).

In an embodiment, the method further comprises Iterating the selection and the determination steps from a first to a last sub-period of the collecting period according to a chronological order.

By doing so, the methods allows processing an entire sequence of traffic volume by iterating the selection and determination steps from the beginning to the end of the sequence.

In an embodiment, each one of the sub-periods is part of only one period of interest.

If the period of interest comprises N sub-periods, it is thus possible to scan the collection period from N to N sub-periods.

In an embodiment, the collecting comprises a number of sub-periods superior to p, the first sub-period comprised in a selected period of interest among the collecting period is a sub-period directly following, according to a chronological order, the p-th sub-period of the collecting period.

The p+1 sub-period is the first sub-period considered because the service determination model is in a transition phase before that, having been trained with p sub-periods in the past. In doing so, the inaccuracies of the transition phase due to the unknown sequence of the past are not taken into account.

In an embodiment, the plurality of services useable at the node comprises at least one of the following service:

- Browsing service,
- File Transfer service,
- Video Conferencing service,
- IPTV service,
- Video over the Top (VotT),
- Audio service,
- Gaming service,
- Voice over IP service (VoIP),
- Internet of Things service (IoT).

This list is not exhaustive and might be improved in case another family of service would need to be considered or would emerge from new Internet usages (e.g.: Virtual Reality/Metaverse) or get available in a training data set.

The method can consider any web service defined as follows:

- service offered by an electronic device to another electronic device, communicating with each other via the Internet, or
- a server running on a computer device, listening for requests at a particular port over a network, serving web documents (HTML, JSON, XML, images).

In practice, a web service commonly provides an object-oriented web-based interface to a database server, utilized for example by another web server, or by a mobile app, that provides a user interface to the end-user.

In an embodiment, the downstream traffic volume and the upstream traffic volume received and sent during the plurality of sub-periods of the collecting period are measured, for each sub-period, by one or more downstream counters and one or more upstream counters; a downstream counter measuring a downstream traffic received at the node during a measuring time, a upstream counter measuring a upstream traffic sent from the node during the measuring time.

In an embodiment, the method further comprises a step of:

Analyzing and/or reporting of the activity of one or a plurality of nodes of the communication network based on at least one determined service during the determination step,

Troubleshooting one or a plurality of nodes of the communication network based on at least one determined service during the determination step,

managing one or a plurality of nodes of the communication network based on at least one determined service during the determination step, and/or optimizing a service used at one or a plurality of nodes of the communication network based on at least one determined service during the determination step.

In some embodiments, the disclosure provides an apparatus for determining a service used at a node of communication network, during a period of interest comprising means for:

- Selecting the period of interest among a collecting period,

wherein the collecting period comprises a plurality of sub-periods, wherein the period of interest comprising at least one sub-period;

- Determining a service used at the node, during the period of interest, by implementing a service determination model on a plurality of inputs, the plurality of inputs comprising:

downstream traffic volume and upstream traffic volume received and sent during the at least one sub-period of the period of interest; downstream traffic volume and upstream traffic volume received and sent during a number p of sub-periods, each one of the p sub-periods preceding the period of interest; wherein the number p is a positive integer; the service determination model being a trained model based on at least one ML sequence-to-sequence prediction model,
wherein the service determination model has been trained to determine the service used at the node during the period of interest.

In some example embodiments, the means in the apparatus further comprises:

- At least one processor; and
- At least one memory including a computer program code, the at least one memory and computer program code configured to, with the at least one processor, cause the operations of the apparatus.

The at least one memory and the computer program code may be configured to, with the at least one processor, cause the apparatus to:

- Selecting the period of interest among a collecting period,

  wherein the collecting period comprises a plurality of sub-periods,
  wherein the period of interest comprising at least one sub-period;

- Determining a service used at the node, during the period of interest, by implementing a service determination model on a plurality of inputs, the plurality of inputs comprising:

  downstream traffic volume and upstream traffic volume received and sent during the at least one sub-period of the period of interest;
  downstream traffic volume and upstream traffic volume received and sent during a number p of sub-periods, each one of the p sub-periods preceding the period of interest;
  wherein the number p is a positive integer;
  the service determination model being a trained model based on at least one ML sequence-to-sequence prediction model,
  wherein the service determination model has been trained to determine the service used at the node during the period of interest.

In some example embodiments, the disclosure also provides an apparatus comprising:

  A first selecting circuitry configured to select the period of interest among a collecting period, wherein the collecting period comprises a plurality of sub-periods, wherein the period of interest comprising at least one sub-period;
  A first determining circuitry configured to determine at least one service used at the node, during the period of interest, by implementing a service determination model on a plurality of inputs, the plurality of inputs comprising:

- a downstream traffic volume received by the node during the period of interest and an upstream traffic volume sent by the node during the period of interest;
- p downstream traffic volumes received by the node during each of p sub-periods preceding the period of interest and p upstream traffic volumes sent by the node during said each of p sub-periods preceding the period of interest;

wherein p is a positive integer number;
the service determination model being a trained model comprising at least one machine learning sequence-to-sequence prediction model,
wherein the service determination model has been trained to determine at least one target service used at the node during a training period of interest.

In an embodiment, the apparatus comprises a first iterating circuitry configured to iterate the selection and the determination steps from a first to a last sub-period of the collecting period according to a chronological order.

In an embodiment, the apparatus comprises:

  A first analyzing circuitry configured to analyze and/or reporting of the activity of one or a plurality of nodes of the communication network based on at least one determined service during the determination step,
  A first troubleshooting circuitry configured to troubleshoot one or a plurality of nodes of the communication network based on at least one determined service during the determination step,
  A first managing circuitry configured to manage one or a plurality of nodes of the communication network based on at least one determined service during the determination step, and/or
  A first optimizing circuitry configured to optimize a service used at one or a plurality of nodes of the communication network based on at least one determined service during the determination step.

**Brief description of the drawings**

For a more complete understanding of example embodiments of the present invention, reference is now made to the following descriptions taken in connection with the accompanying drawings in which:

  FIG. 1 shows an upstream traffic volume and a downstream traffic volume passing through a node of communication network at two different granularities: 5 min for the graph on the top and 30 seconds for the graph at the bottom. The ordinate of the graph refers to the volume of data received or sent. The abscissa of the graph refers to time.

FIG. 2 is a flow diagram representing the steps of a method according to an embodiment. The inputs (downstream and upstream total traffic counters) are passing to a preprocessing step before entering in a sequence-to-sequence prediction based model. The outputs of the multi-class regression model are then post-processed to, at the end, split the downstream total traffic into the plurality of families of service considered (for example, nine families, as explained below)

Fig. 3 shows the architecture of a service determination model using a Compact Convolutional Transformer model in an embodiment.

Fig. 4 depicts the service determination model windowing depending of the target use case, which could be real-time, non-real-time or hybrid.

Fig. 5 is a graph showing a volume of downstream traffic quantified by the model of Fig. 4. It makes it possible to compare performance/accuracy for real-time and non-real-time modes. The circles highlight that, for the real-time mode, at the beginning of a new activity the model has more difficulties to correctly quantify the services as, when making the prediction, the future traffic sequence is fully unknown (future=0). The ordinate of the graph refers to the volume of data received and quantified by the model. The abscissa of the graph refers to time.

Fig. 6 illustrates the service determination model processing a 6 hours traffic sequence at 30 seconds granularity.

Fig. 7 illustrates the error of the model through time. In other words, the ordinate of the graph refers to the level of error committed by the model when implemented. The abscissa of the graph refers to time.

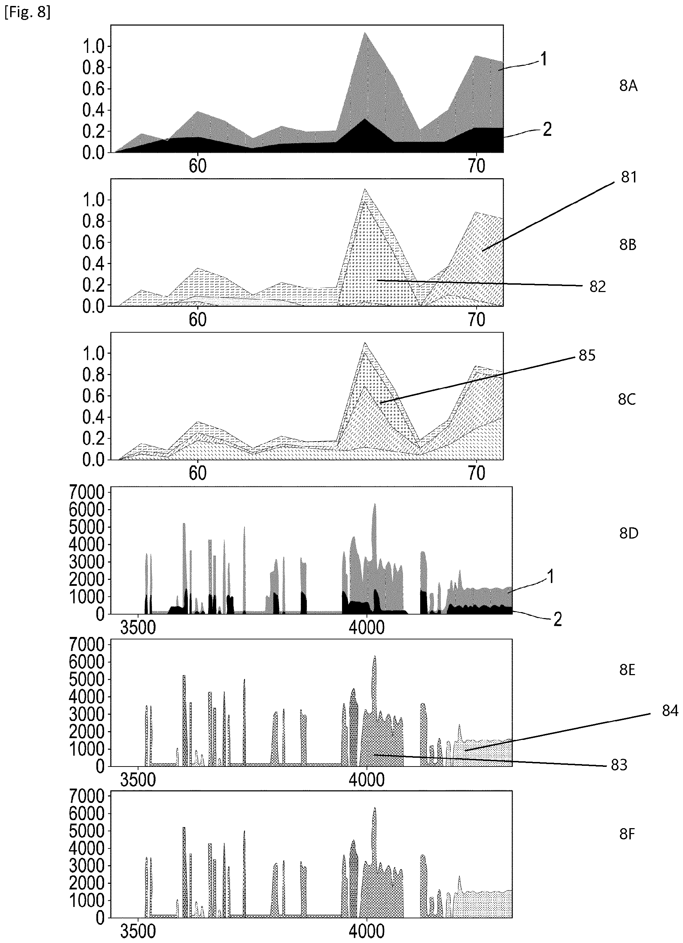

Fig. 8 is a set of partial views taken from a graph showing the service determination model processing a 6 hours traffic sequence at 5 minutes and 5 seconds granularities. The ordinate of the graph refers to the volume of data received and quantified by the model. The abscissa of the graph refers to time. For each granularity, the inputs (ds_Total, us_Total), the targets and the predictions are represented. The partial views consider about one hour and half of the processing. For whole 6 hours, the error metric SUM_SERVICES_MAE is reduced from 493.4 kbps to 101.8 kbps for respectively 5min and 5 sec granularities.

Fig. 9 is a set of partial views taken from a graph that shows real world 15 minutes traffic sequence processed by the service determination model with 5 sec granularity. The partial views consider about 5 minutes of the total sequence of 15 minutes. The ordinate of the graph refers to the volume of data received and quantified by the model. The abscissa of the graph refers to time.

Fig. 10 is a block diagram depicting the apparatus 1200 operating in accordance with an example embodiment described above, i.e. implementing the example embodiment.

## Detailed description of embodiments

Example embodiments of the present application are described herein in detail and shown by way of example in the drawings. It should be understood that, although specific embodiments are discussed herein there is no intent to limit the scope of the invention to such embodiments. To the contrary, it should be understood that the embodiments discussed herein are for illustrative purposes, and that modified and alternative embodiments may be implemented without departing from the scope of the invention as defined in the claims. The sequence of method steps is not limited to the specific embodiments, the method steps may be performed in other possible sequences. Similarly, specific structural and functional details disclosed herein are merely representative for purposes of describing the embodiments. The invention described herein, however, may be embodied in many alternate forms and should not be construed as limited to only the embodiments set forth herein.

Problem to be solved

WAN interfaces (Gateways, ONT's, OLT's,...) usually come with counters able to count the amount of bytes (volume of bytes) that have been passing during a period of time, i.e. to count a downstream traffic volume received by the WAN interface and to count a upstream traffic volume sent by the WAN interface.

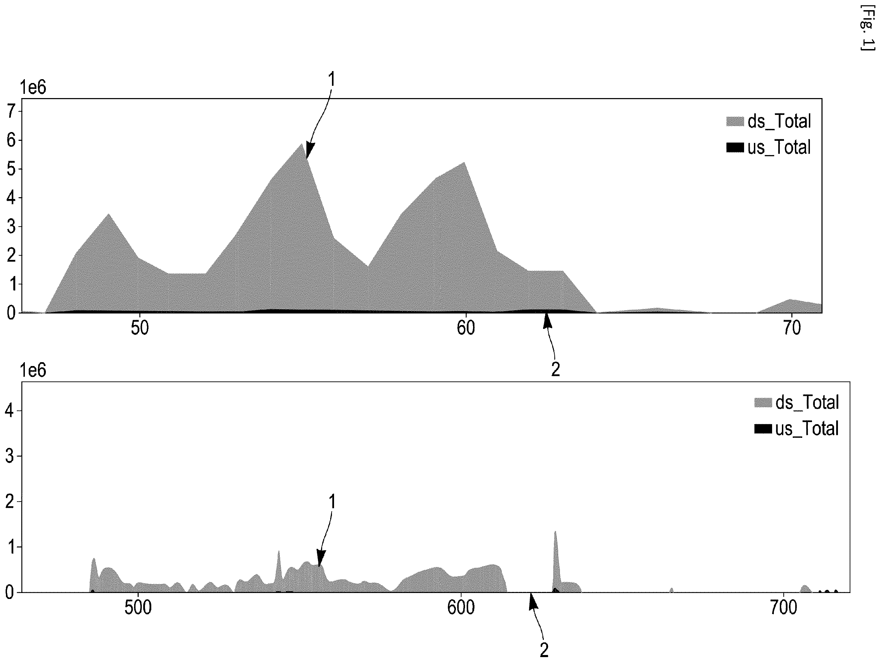

This therefore consists in an aggregated traffic volume over time, leading to an averaged traffic information. Depending on the interface and its API, this information is available at a given granularity, for instance every 5min, every 30s, every 5s, every 1s. Examples of such aggregated volume of bytes (Upstream and Downstream) are illustrated in Fig. 1, for two different granularities.

At Fig. 1 on the graph on the top, downstream and upstream traffic volumes 1 and 2 are received at the node between the 250th minute and the 300th minute. By comparison, on the graph at the bottom of the, downstream and upstream traffic volumes 1 and 2 are received at the node between the 250th and the 300th minute . It can be seen that, downstream traffic volume 1 and upstream traffic volume 2 are more detailed for the granularity of 30 seconds.

In addition, these aggregated traffic volumes can be considered as privacy-preserving traces since from these aggregated traffic volumes, commonly available on network equipment, there is no direct information or separation about the different running services making any decision based on service usage directly feasible.

Proposition of the disclosure

This disclosure provides a system and a method to recognize and quantify various types of services from an aggregated volume of traffic. The system and method leverage artificial intelligence and machine learning via the design and use of a sequence-to-sequence prediction model, for example based on convolutional transformers.

The system and method take as inputs an aggregated volume of downstream and upstream traffic and output separated and quantified traffic volumes per service-types based on the inputs. The service-type classification is made according to a predetermined plurality of services.

As an example and as it will be described in further details below, the system and method allow to successfully detect and quantify different services or activities for an end-user only based on aggregated downstream and upstream volumes measured at the end-user: for example, some web browsing, followed by a peak of file transfer, then VotT sessions (Netflix like) and finally a mix of VotT with gaming.

The system and method offer a solution for detecting, recognizing, separating and quantifying various types of services that are in-use, over time, for a given internet subscriber. The solution is accurate but also flexible, offering a detailed activity-usage quantification practical for end-user profiling and for a sub-sequent decision-making process, for instance for targeted troubleshooting or usage-specific technology optimization.

In addition, major advantages offered by the system and method described in the disclosure reside on the ability to offer such capability with privacy-preserving data (i.e. not requiring sorting data per-service or per-device or per-application...) and without the need for packet inspections.

Method

The method aims to determine a service or at least one service used at a node of communication network, during a period of interest.

To that end, the method provides a service determination model that has been trained to determine at least one target service used at the node during a training period of interest.

The service determination model is a trained model comprising at least one machine learning sequence-to-sequence prediction model.

Definition of the services

The service or at least one service is determined among a plurality of services-type or, in other words, among different families of services.

Therefore, first, different families of services to be distinguished are defined. Then, the method will allow to quantify these defined services from some types of internet traffic.

As such, for example, nine different families of web services are considered:

- Browsing
- File Transfer
- Video Conferencing
- IPTV
- VotT (Video over the Top)
- Audio
- Gaming
- VoIP (Voice over IP)
- IoT (Internet of Things)

In others words, the plurality of services useable at the node comprises at least one of the following service:

- Browsing service,
- File Transfer service,
- Video Conferencing service,
- IPTV service,
- Video over the Top (VotT),
- Audio service,
- Gaming service,
- Voice over IP service (VoIP),
- Internet of Things service (IoT).

This list is not exhaustive and might be revised in case another family of service would need to be considered or would emerge from new Internet usages (e.g. Virtual Reality/Metaverse) or get available in a training data set.

The method can consider any web service defined as follows:

- a service offered by an electronic device to another electronic device, communicating with each other via the Internet, or
- a server running on a computer device, listening for requests at a particular port over a network, serving web documents (HTML, JSON, XML, images).

In practice, a web service commonly provides an object-oriented web-based interface to a database server, utilized for example by another web server, or by a mobile application, that provides a user interface to the end-user.

Model: inputs and outputs

The method is based on artificial intelligence and machine learning and more specifically on supervised Deep Learning and even more specifically on a sequence-to-sequence prediction model.

The inputs of the service determination model are downstream and upstream traffic counters at a determined available time-granularity. This granularity can be set by the user of the method or required by the equipment. It can be coarse-grained (5 minutes counters for example) or finer grained (30 seconds, 5 seconds, or other).

In other words, the inputs of the model are downstream traffic volumes and upstream traffic volumes processed at the node and measured by downstream counters and upstream counters. Theses counters have their own period of time during which they count the traffic passing through. Thus, a downstream counter measures a downstream traffic received at the node during a measuring time and an upstream counter measures an upstream traffic sent from the node during the measuring time.

For example, during a collecting period, the downstream counters and upstream counters are collected.

Based on these counters, the collecting period can be divided into a plurality of sub-periods for which downstream and upstream traffic volume have been measured thanks to the counters.

Thus, the downstream traffic volume and the upstream traffic volume received and sent during the plurality of sub-periods of the collecting period are measured, for each sub-period, by one or more downstream counters and one or more upstream counters.

Indeed, a strength of the method is to only consider traffic volumes that pass through at a node of a communication network, since such inputs do not infringe privacy requirements.

The desired output of the model is the split of the downstream traffic volume measured by the downstream traffic counters into several families of services - as defined above - at the same time-granularity than the inputs. In other words, the service determination model takes as inputs both downstream and upstream traffic volumes and delivers as output a split of the downstream traffic volume into a plurality of different services categories, for example into the nine different services categories above defined.

The outputs differ depending on the specific use cases of the method.

For example, different use cases, from the easiest (a) to the more complex (d), can be considered:

- a - One Service Detection: for each interval, detect if one specific service is used (binary classification)
- b - Main Service Detection: for each interval detect which service is mainly present, e.g., the service consuming the highest bitrate (multiclass classification)
- c - Services Detection: for each interval detect which services are present (multi-label classification)
- d - Services Quantification: for each interval quantify which services are used (multi-target regression)

Model: training dataset

The training of the service determination model requires a massive amount of labelled data with the accurate split of traffic counters into the considered services.

One possibility is to build such training set by, for example, capturing Wireshark traces containing packets header at the level of the CPE (home gateway), then considering a method like the deep packet inspection (DPI) packet enrichment to label the servers used in the packets exchanged and finally regroup them in families of services.

At the end, such labelling of Wireshark traces would require linking the IP/port captured in the trace with the corresponding family of service. In addition, building a training dataset from Wireshark traces would require, on top of this extra labelling activity, to capture a huge amount of different and well-balanced traffic traces.

As this approach is valid but extremely time consuming, another possibility is to generate the training set based on semi-synthetic data from a communication network digital twin. With a communication network digital twin, it is possible to generate, on-demand, realistic and service-labelled traffic traces to build the training set composed of hundred thousand to millions of traces.

The training dataset is build according to the considered use case. The labelling requirements of the data and/or the generated data depends on the use case.

Model: architecture

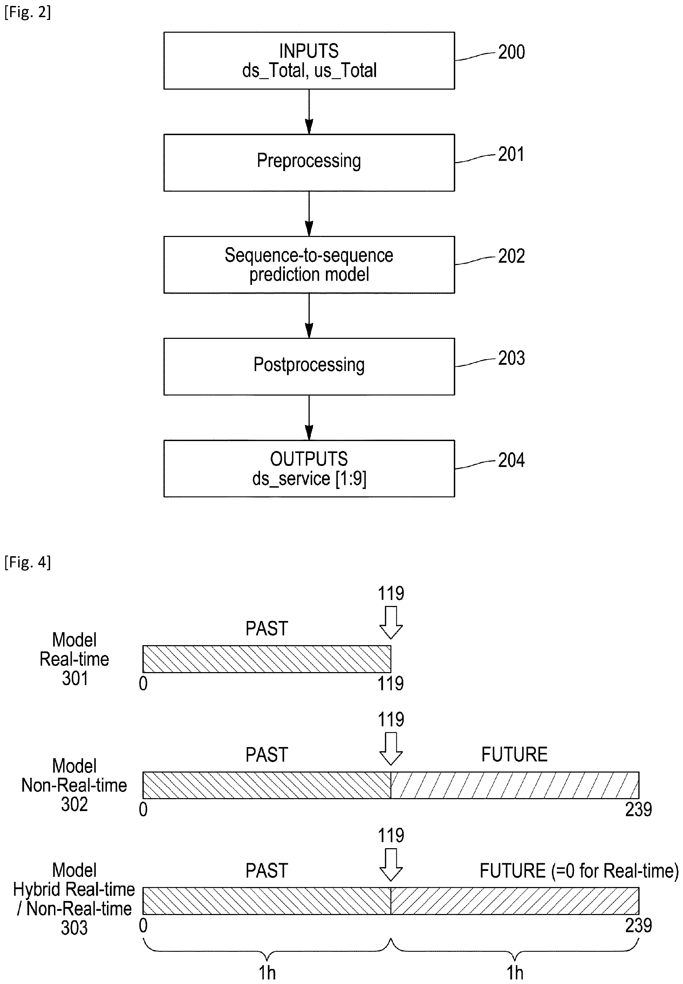

Fig. 2 illustrates the different high-level steps of the method according to this use case d).

At step 200, the inputs considered for the model are downstream and upstream traffic volumes measured as illustrated at Fig. 1.

At step 201, the inputs (downstream and upstream traffic volumes) are passing to a preprocessing step before entering in a sequence-to-sequence prediction model (for example a convolutional-transformer based model (CCT model)).

It is important to note that the inputs - downstream and upstream traffic volume - can be split into any number n of different families depending on the initial definition of these n different families. Here, as an example, nine different families are considered.

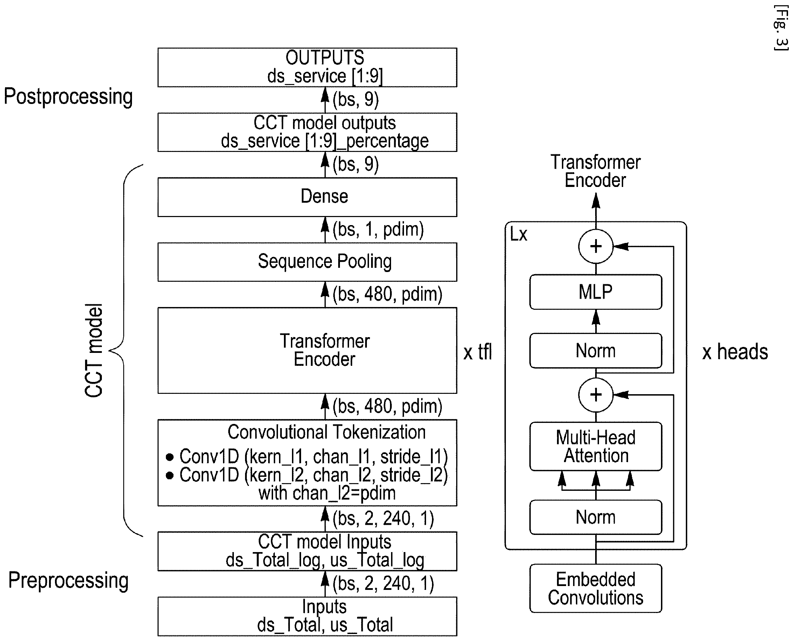

Many different approaches for the different blocks of preprocessing, model and post processing have been studied and considered. However, as illustrated in Fig. 3 illustrates in more details these steps and the different components of the sequence-to-sequence prediction model used to achieve the use case d).

Despite different other options might be considered, for the preprocessing, as the downstream and upstream traffic counters have a high dynamic range (from no traffic to gigabits per second), the selected option is to transform the traffic volume counters values from a linear scale to logarithmic scale.

At step 202, the result of the pre-processing is the input of the service determination model which is a Deep Learning (DL) model. This DL model is a sequence-to-sequence prediction model : different architectures like (but not limited to) Convolutional Neural Networks (CNN), Visual Transformers (ViT), or convolutional-transformer base model can be considered.

In general, any DL model that would allow a sequence-to-sequence prediction might be considered. However, Compact Convolutional Transformer architecture (CCT model) is used in this particular embodiment to limit the model size and training time and to reach the best performances/accuracies.

However, Compact Convolutional Transformer architecture (CCT model) is used in this particular embodiment, .

In others words, the service determination model is a trained model comprising at least one Compact Convolutional Transformer.

This model architecture is illustrated at Fig. 3:

- the inputs are passing through a Convolutional Tokenization layer that applies one or more convolution layer(s) to the inputs and adds positional encoding.
- next, the result is processed by a number [tfl] of layers of Transformer Encoder (composed of multi-head attention layers).
- the output of the Transformer Encoder layers is aggregated through a Sequence Pooling layer before the final regression with the Dense layer to 9 service families.

First, at Fig. 3, the following abbreviations used are defined hereafter:

"bs" means "batch size"
"pdim" means "number of projection dimensions"
"tfl" means "number of transformation layers"
"heads" means "number of multi-attention heads"
"kern_l1, kern_l2" refer to the kernel size
"chan_l1, chan_l2" refer to the dimension of the output space
"stride_l1, stride_l2" refer to the stride length.

For the CCT model, two layers of convolutions are defined and used, with their associated hyper-parameters (kern_l1/l2, chan_l1/l2, stride_l1/l2) and a small size transformer, with only 2 transformer layers and one attention head.

It should be noted that, for the convolutional layers, there is the additional constraint that the dimension of the output space of the last convolutional layer (chan_l2) should be aligned with the number of projection dimensions (pdim) used in the transformer layers. To that end, a possibility is to use a genetic algorithm to search for the best hyperparameters of the convolution layers (kern_l1/l2, chan_l1/l2, stride_l1/l2) and transformer layers (pdim).

Other CCT architectures and other hyperparameters might also be considered.

In addition, the model targets should be wisely selected for the training.

One possibility could be to select the amount of downstream traffic split across the 9 different types of service (in linear or better in log scale due to the high dynamic range) but due to the specific nature of each type of service, this will favour high bitrate services (e.g.: File Transfer) against low bitrate services (e.g.: Audio, VoIP). Typically, a model trained with such targets will discard the low bitrate services and favors high bitrate services. This is not the expected behavior as since the model is conceived to also detect and quantify accurately lower bitrate services.

The key solution for this problem was to transform the bitrate per services into percentage of ds_Total.

Hereafter are some examples to illustrate the solution found. These examples consider only one interval of one second and two services FileTransfer and VotT:

If only a FileTransfer of 100 Mbps is present in that interval:

-

$$ds\_Total = 100 \text{ Mbps}$$

-

$$ds\_FileTransfer = 100 \text{ Mbps}$$

-

$$ds\_VotT = 0 \text{ Mbps}$$

The targets are then:

-

$$ds\_FileTransfer\_percentage = 1.00$$

-

$$ds\_VotT\_percentage = 0.00$$

If only a VotT stream of 5 Mbps is present in that interval:

-

$$ds\_Total = 5 \text{ Mbps}$$

-

$$ds\_FileTransfer = 0 \text{ Mbps}$$

-

$$ds\_VotT = 5 \text{ Mbps}$$

The targets are then:

-

$$ds\_FileTransfer\_percentage = 0.00$$

-

$$ds\_VotT\_percentage = 1.00$$

If a FileTransfer of 100 Mbps and a VotT stream is present in that interval:

-

$$ds\_Total = 105 \text{ Mbps}$$

-

$$ds\_FileTransfer = 100 \text{ Mbps}$$

-

$$ds\_VotT = 5 \text{ Mbps}$$

The targets are then:

-

$$ds\_FileTransfer\_percentage \approx 0.95238$$

-

$$ds\_VotT\_percentage \approx 0.04762$$

The usage of percentage of the ds_Total per service has the advantage to consider the low bitrate services equally with high bitrate service when they are alone in an interval (as ds_serviceX_percentage=1.00). And if during the interval, the services are mixed, we consider the target percentage proportional to the bandwidth shared between the services.

Knowing that the model targets are 9 service percentages of ds_Total (that could be writen ds service [1:9]_percentage), the final postprocessing consists of two steps:

First, ensure that for the ds_service[1:9] we will respect the ds_Total envelope. As the model is performing a regression with 9 targets between 0 to 1 (percentage per service), the postprocessing will ensure that no prediction is below 0 and that the sum of all percentage services prediction will sum to 1 (by normalizing the total of the percentage prediction to 1)

Then, retransforming the percentage of ds_Total per service in bandwidth per service. It's simply applying the reverse operation that the one executed to build the target percentage per service from the bandwidth per service.

Back to Fig. 2, at step 203, the outputs of the multi-class regression model are then post-processing, to, at the end, at step 204, split the downstream total traffic volume into the nine families of service considered (as explained above).

Model: training strategy

Considering that, from a communication network digital twin, a training dataset has been generated to train the service determination model with:

- Hundreds thousands of long traffic sequences (e.g.: one week): ds_Total, us_Total
- With their corresponding split into 9 families of services: ds service[1:9]_percentage
- For a particular granularity, a 30 seconds granularity

In other words, downstream traffic volume and upstream traffic volume have been generated for a period of one week with a granularity of 30 seconds for a sequence of time of one week (it is an example).

Then, a specific window of time - a collecting period - out of the each long traffic sequences is considered by the model to predict ds service[1:9]_percentage for one particular interval - a period of interest.

The collecting period comprises a plurality of sub-periods from the long traffic sequences generated.

As illustrated in Fig. 4, for a granularity of 30 seconds, it is possible to consider different type of window depending of the specific implementation of the method desired:

- Real-time/Causal 301
- Non-Real-time/Non Causal 302
- Hybrid 303 : Real-time / Causal and Non-Real-time / Non Causal

In each training mode of the service determination model, the period of interest is equal in length to the training period of interest.

Real-time/Causal

In the real-time training mode, the service determination model is trained to process the data in real time, meaning as soon as a new sub-period (for example of 30 seconds) of input data is available.

In this mode, the service determination model is trained to determine at least one target service used at the node during a plurality of training periods of interest based on the following inputs:

- a training downstream traffic volume received by the node during a training period of interest and an upstream traffic volume sent by the node during the training period of interest;
- p training downstream traffic volumes received by the node during each of p training sub-periods preceding the training periods of interest of the first part of the plurality of training periods of interest and p upstream traffic volumes sent by the node during said each of p training sub-periods preceding the training periods of interest of the first part of the plurality of training periods of interest;

. In the real-time mode, it is possible to only consider a time window in the past, for example, one hour of traffic, corresponding to 120 sub-periods with a target to predict the ds service[1:9]_percentage for the last sub-period of the traffic sequence considered.

In other words, in this example:

- the collecting period comprised 120 sub-periods
- the period of interest consist of 1 sub-period which is the last of the 120 sub-periods.

So, in this example, p = 119.

The time periods 601 and 602 correspond to transition to steady-state. The time-period 601 is a transition to steady-state for all models as no past is available. Time period 602 is a transition to steady-state only for the non-real-time model as no future is available at the end the entire time window.

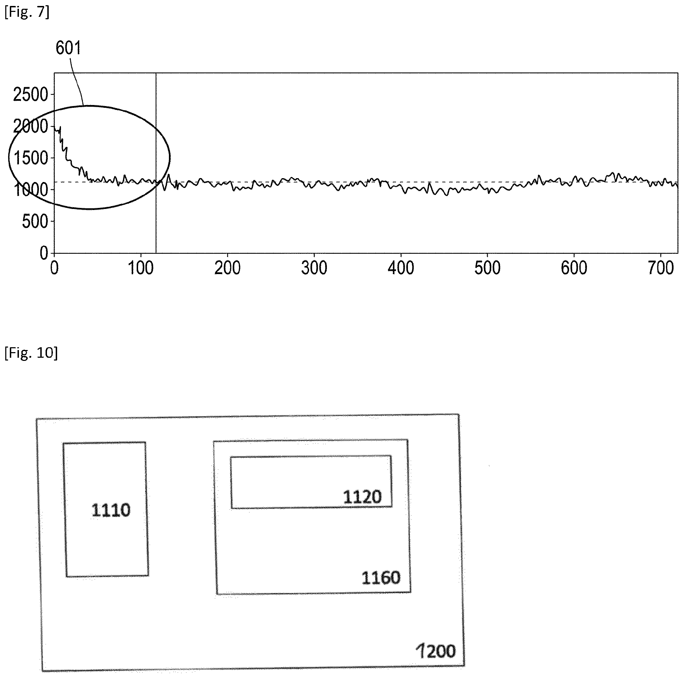

Fig. 7 illustrates the error of the model through time for a granularity of 30 seconds. The transition to steady-state 601 is depicted.

The at least one target service determined depends on the use case for which the model is trained. Thus, it appears that the training mode of the model is completely independent of the use case for which the model is trained.

Non-Real-time/Non-Causal

In the non-real-time training mode, the service determination model is trained to process data in non-real time, meaning that the model also considers a future traffic sequence compared to the period of interest. The future traffic sequence, corresponding to a plurality of sub-periods following the period of interest, helps the model to better recognize the activities from the past and future shape of the ds_Total and us_Total traffic sequences.

In this mode, the service determination model is trained to determine at least one target service used at the node during a plurality of training periods of interest based on the following inputs:

- a training downstream traffic volume received by the node during a training period of interest and an upstream traffic volume sent by the node during the training period of interest;
- p training downstream traffic volumes received by the node during each of p training sub-periods preceding the training periods of interest of the first part of the plurality of training periods of interest and p upstream traffic volumes sent by the node during said each of p training sub-periods preceding the training periods of interest of the first part of the plurality of training periods of interest;
- f training downstream traffic volumes received by the node during each of f training sub-periods following the training periods of interest of the first part of the plurality of training periods of interest and f upstream traffic volumes sent by the node during said each of p training sub-periods following the training periods of interest of the first part of the plurality of training periods of interest;

For example, in this training mode, the model considers one hour of traffic in the past and one hour of traffic in the future and then a total sequence of 2 hours (240 sub-periods of 30 seconds) and is trained to predict, for example ds service[1:9]_percentage, for a training period of interest corresponding to the sub-period in middle of the considered past and future traffic sequence (120th sub-period).

In addition, if a real-time reactivity is not the main target but that waiting as long as the past window, i.e. as long as the p sub-periods, it is possible to reduce the future window, i.e. the f sub-periods, to a few f sub-periods compared to the p sub-periods.

This non-real time training mode could be seen as a near-real-time scenario since only a few f sub-periods are needed for the model. This will definitely help the model to have a few future samples compared to no future sample at all.

In summary, as soon as the integer f is superior to 0, the service determination model is not trained according to the non-real time mode since it takes as inputs downstream traffic volume and upstream traffic volume received at the node during at least one sub-period following the period of interest.

However, it is possible to make distinction:

A) An integer f "big" (e.g. f corresponds to 120 sub-periods corresponding to one hour), means that the prediction of the service determination model would be available only one hour after the current time. In this case, the service determination model is trained according to the non-real-time mode.

B) An integer f "small" (e.g. f corresponds to a few sub-periods corresponding to few minutes), means that the prediction would be available after a few minutes. In this case, the service determination model is trained according to a near-real-time mode.

Hybrid

In the hybrid training mode, the service determination model is trained to be compatible with both real-time and non-real-time.

In this mode, the service determination model is trained to determine at least one target service used at the node during a plurality of training periods of interest based on two different set of training inputs: for one part, the model is trained to determine at least one target service only based on training data from the past in comparison to the traffic volume of the training period of interest; and, for another part, the model is trained to determine at least one target service based on training data from the past and training data from the future compared to the traffic volume of the training period of interest.

Thus, according to the hybrid training mode, to determine the at least one target service used at the node, for a plurality of training periods of interest, based on a plurality of training inputs.

For a first of two parts of the plurality of training periods of interest, the plurality of training inputs comprises:

- p training downstream traffic volumes received by the node during each of p training sub-periods preceding the training periods of interest of the first part of the plurality of training periods of interest and p upstream traffic volumes sent by the node during said each of p training sub-periods preceding the training periods of interest of the first part of the plurality of training periods of interest;

- f training downstream traffic volumes received by the node during each off training sub-periods following the training periods of interest of the first part of the plurality of training periods of interest and f upstream traffic volumes sent by the node during said each of p training sub-periods following the training periods of interest of the first part of the plurality of training periods of interest;

And, for a second of the two parts of the plurality of training period of interest, the plurality of training inputs only comprises:

- training downstream traffic volume and training upstream traffic volume received and sent during the number p of training sub-periods, each one of the p training sub-periods preceding the training periods of interest of the second part of the plurality of training periods of interest.

For example, in this training mode, the model is trained as the non-real time model (for example, for a window of 2 hours with 240 sub-periods and predicting the 120th sample) but during this training mode, the model is provided with the future of the traffic sequence for half of the training examples; and for the other half, the future of the traffic sequence is set to 0 (as if the model don't know or have the future like in real-time).

Training iterations

Once a specific window size and model type (real-time, non-real-time, near-real-time or hybrid) has been selected, the training set is parsed by randomly select traffic sequences at the size of the mode. For example, a collecting period of 2 hours comprising 240 sub-periods of 30 seconds for a hybrid model.

This will allow to train the CCT model, as defined in the Architecture section, par batch of traffic volume sequences. As the model size sequence of traffic (e.g.: 2h) are randomly select out of long traffic sequences (e.g.: 7 days), it is possible to parse multiple time the training dataset and still have high diversity in the training batches.

The loss used to compare the model predictions to the targets is a standard MSE loss (Mean Squared Error)

It is also possible to use a more specific loss, in case, for example, the performances to recognize and quantify one of the (9) service is lower than expected, it is possible to "boost" it by increasing the weight of the loss for that particular service.

Once all this is correctly setup, the CCT model is trained for multiple epochs by processing the batches and using gradient-based methods (ADAM) and backpropagation. As usual, once the loss when training as reached a global minimum, the early stopping will stop the training process and as a result, a model with trained weights useable for inference has been trained.

Training: performance

From a performance/accuracy point of view, it has to be noted that a full real-time model, i.e. a service determination model training according to the real-time training mode, would have less good performances than a non-real-time model, i.e. a service determination model training according to the non-real-time training mode, as knowing the shape of the future traffic is helping the model to recognize and quantify the services.

Using the hybrid model, i.e. a service determination model training according to the hybrid training model, will nearly not degraded the performances in non-real-time, compared to a full non-real-time model but improve the performances for real-time. It looks like, thanks the processed examples in non-real-time, the hybrid model has better performances in real-time as having half of the examples with the future is somehow

**EP 4 561 006 A1**

helping when the future is not present (real-time).

The choice between a real-time and non-real-time model depends on the use case in which the model will be implemented and the hybrid model (C) is compatible with both.

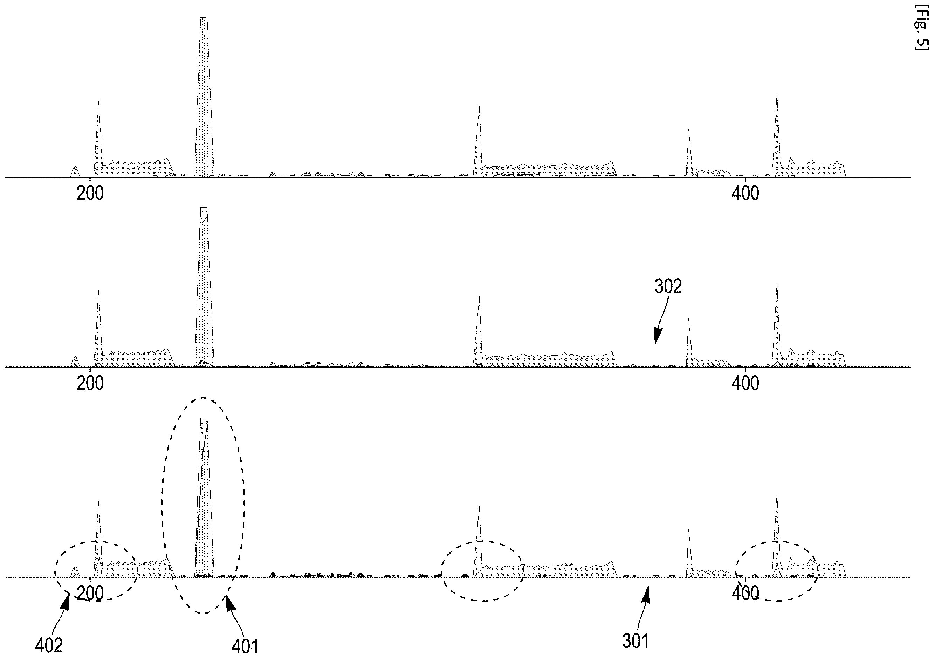

As highlighted in Fig. 5, the accuracy of the model is slightly lower for real-time model 301 compared to a non-real-time model 302 as typically when the future traffic sequence is fully unknown, the model will have difficulties typically at the beginning of a new activities.

Parts 401 and 402 of the results graph on the real-time model 301 shows more important errors for the real-time model 301. This mainly occurs at the start of a new activity to be quantified.

Additional embodiment

As explained above, the service determination model is trained to take as inputs both downstream and upstream traffic volumes and delivers as output a split of the downstream traffic volume into a plurality of different services categories, for example into the nine different services categories above defined.

Thanks to this output which allows decomposing the downstream traffic into the different services used a good overview of the services used by the end-user is provided.

However, it is also possible to go further and also split the upstream total traffic volume into the 9 different services categories considered by considering classifying and/or quantifying the upstream traffic volume sent by the node during the period of interest based on the same inputs used for splitting the downstream traffic volume into a plurality of different services categories.

In this additional embodiment, the outputs of the service determination model would be ds_services[1:9] and us_services[1:9] following the example embodiment explained for the split of the downstream traffic volume into a plurality of different services categories.

Methods

Thanks to the real-time training mode or the hybrid trained mode explained above, it is possible to implement the following method for determining a service used at a node of communication network, during a period of interest:

- Selecting the period of interest within a collecting period,

    wherein the collecting period comprises a plurality of sub-periods,
    wherein the period of interest consisting of at least one of said sub-periods;

- Determining at least one service used at the node, during the period of interest, by implementing a service determination model on a plurality of inputs, the plurality of inputs comprising:

    - a downstream traffic volume received by the node during the period of interest and an upstream traffic volume sent by the node during the period of interest;
    - p downstream traffic volumes received by the node during each of p sub-periods preceding the period of interest and p upstream traffic volumes sent by the node during said each of p sub-periods preceding the period of interest; wherein p is a positive integer number;

In this method, the service determination model being a trained model comprising at least one machine learning sequence-to-sequence prediction model, and the service determination model has been trained to determine at least one target service used at the node during a training period of interest according to the real-time training mode explained above.

Thanks to the non-real time training mode or the hybrid trained mode explained above, it is possible to implement the following method for determining a service used at a node of communication network, during a period of interest:

- Selecting the period of interest within a collecting period,

    wherein the collecting period comprises a plurality of sub-periods,
    wherein the period of interest consisting of at least one of said sub-periods;

- Determining at least one service used at the node, during the period of interest, by implementing a service determination model on a plurality of inputs, the plurality of inputs comprising:
- a downstream traffic volume received by the node during the period of interest and an upstream traffic volume sent by the node during the period of interest;
- p downstream traffic volumes received by the node during each of p sub-periods preceding the period of interest and p upstream traffic volumes sent by the node during said each of p sub-periods preceding the period of interest; wherein p is a positive integer number;
- f downstream traffic volumes received by the node during each of f sub-periods following the period of interest and upstream traffic volumes sent by the node during said each of f sub-periods following the period of interest; wherein f is a positive integer number.

As explained above, the number f can be equal or not to the number p.

As a reminder, different use cases, from the easiest (a) to the more complex (d), can be considered:

- a - One Service Detection: for each interval, detect if one specific service is used (binary classification)
- b - Main Service Detection: for each interval detect which service is mainly present, e.g., the service consuming the highest bitrate (multiclass classification)
- c - Services Detection: for each interval detect which services are present (multi-label classification)
- d - Services Quantification: for each interval quantify which services are used (multi-target regression)

In the use case a), the methods above mentioned further comprises:

- the plurality of inputs further comprises a service request designating a service useable at the node, and
- determining the at least one service used at the node comprises outputting an indication of use of the service designated in the service request; wherein the at least one target service is a designated target service designated in a training service request.

In the use case b), the methods above mentioned further comprises:

- determining the at least one service used at the node comprises determining a main service ; the main service being a service generating a highest traffic among a plurality of services useable at the node; wherein the at least one target service is a main target service used at the node during the training period of interest.

In the use case c), the methods above mentioned further comprises:

- determining the at least one service used at the node comprises determining a plurality of services used at the node, wherein the at least one target service comprises a plurality of target services used at the node during the training period of interest.

In the use case d), the methods above mentioned further comprises:

- determining the at least one service used at the node further comprises outputting an indication of traffic volume generated by each service of the plurality of services,
- the service determination model being trained to determine the traffic volume generated by each target service of the plurality of target services used at the node during the training period of interest.

Inference

Once a trained service determination model is obtained, it is possible to use it to process traffic volume sequences.

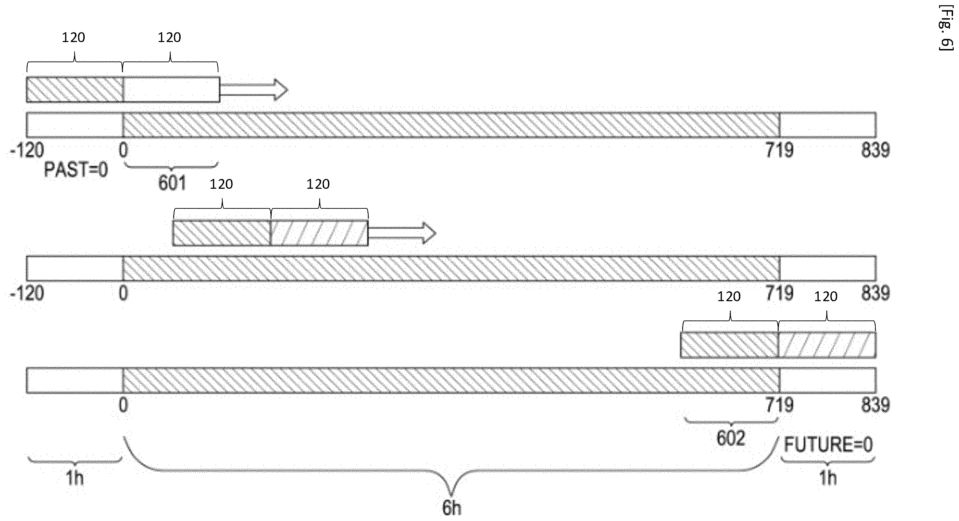

Fig. 6 illustrates an inference of the model on a 6 hour traffic sequence at 30 seconds granularity, corresponding to 720 sub-periods of 30 seconds as depicted.

In this particular example, a hybrid model (120 past sub-periods, i.e. p = 120; and 120 future sub-periods, i.e. f = 120) is considered.

Then, as the model is a hybrid model, it is possible to select if the prediction is to be made in non-real-time mode, as if the model knows the future, or in real-time mode, as if the model does not know the future.

In this example of Fig. 6, a prediction for the full 6 hours sequence is desired so 720 sub-periods have to be pad with 120 sub-periods before and 120 sub-periods after.

Then, according to the use case d), the service determination model is able to start predicting the Service Quantification for the sub-period 0, but for that sample the past is fully unknown (padding=0), as such the accuracy will be lower than expected when processing the beginning of the 6 hours traffic sequence. This is illustrated by the transition to steady state which show that error is higher when processing the first samples of the traffic sequence.

Then it is possible to simply process the 720 sub-periods sequence, one prediction at a time.

In others words, it is possible to iterate the selection and the determination steps from a first to a last sub-period of the collecting period according to a chronological order.

Here, it is possible to iterate the selection and the determination steps from the sub-period 0 to the sub-period 719.

It is also possible that each one of the sub-periods is part of only one period of interest. Here, the period of interest corresponds to one sub-period. But, if, the period of interest is composed of a plurality of sub-periods (for example 10), it is possible to process the sequence 10 sub-periods by 10 sub-periods, i.e. the periods of interest do not have any sub-period in common with each other.

Note that in case of hybrid model, if the prediction is in non-real-time mode, it is also possible to see a transition (with slight increase in the mean error) for the last samples of the sequences as the future is set to 0 (padding=0).

Thus, it is possible to not consider those steady state transition by bypassing the first predictions when processing a sequence of traffic. In others words, when the collecting comprises a number of sub-periods superior to p, the first sub-period comprised in a selected period of interest among the collecting period is a sub-period directly following, according to a chronological order, the p-th sub-period of the collecting period.

Performances

The real-time and non-real time performances have already been discussed in the disclosure in the training performance section. But it is also possible to quantify using, for example, a test set composed of 5000 sub-periods of 6 hours sequences at 30 seconds granularity. Processing this test set with the hybrid model for both real-time and non-real-time predictions is providing the following macroscopic result:

- 30 sec Real-time SUM_SERVICES_mean_MAE: 913.108 kbps
- 30 sec Non Real-time SUM_SERVICES_mean_MAE: 720.838 kbps (-21.1% compared to 30sec real-time)

Here, the SUM_SERVICES_mean_MAE is a metric of the mean sum of the error on all services over the 5000 sequences of 720 intervals of 30 seconds

This confirms that the non-real-time is more accurate than the real-time as knowing the future traffic sequence shape is helping the model for a more accurate Service Quantification (SQ).

As discussed before, it is possible to select the granularity, i.e. the length of the sub-periods, of the considered traffic volume sequence, and for sure, it has a direct link with the service determination model performances. Finer granular data will contains more specific shape information that would help the service determination model to correctly recognize and quantify the different services.

At Fig. 8, one example of non-real-time prediction traffic sequence in 5 min and 5 sec granularity with the reduced error (in kbps) when we consider finer granularity is provided.

At Fig. 8, a service determination model is processing a 6 hours traffic sequence at 5 minutes and 5 seconds granularity.

For each granularity, the inputs (ds_Total, us_Total), the targets and the predictions are represented. The error metric SUM_SERVICES_MAE is reduced from 493.4 kbps to 178.8 kbps and 101.8 kbps for respectively 5min, 30 sec and 5 sec granularity.

By comparing the same metrics (SUM_SERVICES_mean_MAE) on the same test dataset of 5000 samples of 6 hours traffic sequences at different granularities, the following results are obtained for a real-time service determination model:

- 5 min Real-time SUM_SERVICES_mean_MAE: 1259.830 kbps
- 30 sec Real-time SUM_SERVICES_mean_MAE: 913.108 kbps (-27.5% compared to 5min real-time)
- 5 sec Real-time SUM_SERVICES_mean_MAE: 650.272 kbps (-48.4% compared to 5min real-time)

And, on the same test dataset of 5000 samples of 6 hours traffic sequences at different granularities, the following results are obtained for a non-real-time service determination model:

- 5 min Non Real-time SUM_SERVICES_mean_MAE: 1128.912 kbps
- 30 sec Non Real-time SUM_SERVICES_mean_MAE: 720.838 kbps (-36.1% compared to 5min non-real-time)
- 5 sec Non Real-time SUM_SERVICES_mean_MAE: 544.059 kbps (-51.8% compared to 5min non-real-time)

As visible in Fig. 8 and also in the macroscopic results on the full dataset, the service determination model error is substantially reducing when considering with finer granularities.

For example, Fig. 8 illustrates the processing of a same time-period with a granularity of 5 minutes at the three top graphs 8A, 8B, 8C and with a granularity of 5 seconds at the three bottom graphs 8D, 8E, 8F.

Graphs 8A and 8D illustrate the inputs of the service determination model, i.e. the downstream traffic volume 1 received and the upstream traffic volume 2 sent during the collecting period. As expected, the graph 8D is more detailed : the periods when few traffic volume are received or sent can be distinguished with the periods of large reception or sending.

Then, the graphs 8B and 8E represents the targets of the service determination model. In others words, the graphs 8B and 8E represents the repartition per services used of the graphs 8A and 8D. For example, areas 81 and 82 of graph 8B refer to two different target services used at the node, so do areas 83 and 84 of graph 8E.

The service determination model is trained, during the training phase, to find those targets only based on the inputs represented on graphs 8A and 8D.

The training outputs are represented at graphs 8C and 8F. The best output possible are graphs perfectly identical respectively to graphs 8B and 8E.

As it can be seen at graph 8C, the area 85 does not perfectly fit with the corresponding area 82 of graph 8B : the service determination model manages to detect and quantify the service illustrated by area 82 but the quantification can be more accurate.

A more accurate output can be seen with the granularity of 5 seconds. Indeed, the graphs 8F and 8E are very similar to each other. It is barely impossible to identify a difference between them meaning that the targets service have been very accurately quantified by the service determination model.

As only very few labelled real-world traffic traces are available, the above validation examples have been generated using a communication network digital twin (semi-synthetic data).

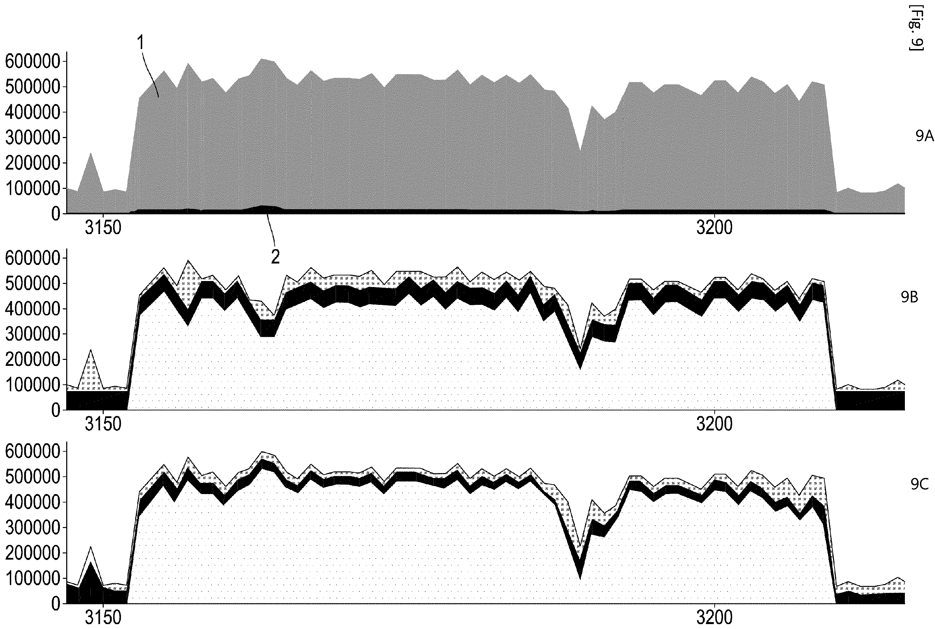

Fig. 9 illustrates that the service determination model is also applicable and providing good performances using very challenging real-world traces taken on a real access network. The granularity is 5 seconds in this example.

Based on the downstream traffic volume 1 and the upstream traffic volume 2, the service determination model quantified services as illustrated on graph 9C. It can be seen that the areas of graph 9C are very similar to the areas of graph 9B. This means that the service determination model is also very accurate with training data from real data.

Real downstream traffic volume 1 and real upstream traffic volume 2 are classified into File Transfer, IPTV, VoIP and VotT which are four of the nine service-type defined during the training.

Those real world traces are challenging because, they contains an important mix of different services and the scenario which have been traced only last around 15 minutes and, as such, it might be expected a transition period to steady state (higher error as padding and past=0) when predicting the first samples of the traffic sequence.

Through these real-world examples, this confirms and reassures the various choices that have been made through the architecture and the training of the service determination model, from the pre-processing, post-processing, training strategies up-to the digital twin.

As mentioned earlier, the service determination model and underlying methods are not linked to a technology itself, but fairly offer a medium/technology agnostic processing of exchanged aggregated traffic volume. Even if demonstrated on network digital twin data, there is high confidence that present model and method applies to other technology domains. For instance, if such system get trained on (labelled) Private Wireless Networks traffic data, it would be able to recognize and quantify the usage patterns for the various classes of activities that are targeted in the training data set.

Technical applications

The results of the method, i.e. at least one determined service using at the node during a period of interest and by extension the result of any use case according to any mode presented above, can then be used for various technical applications.

For example, it can be used during troubleshooting relative the node or others node of the communication network. Troubleshooting consists of looking for the source of a problem in order to identify the symptoms and eliminate the potential causes, until it is resolved. For example, the real-time mode offers by the method can help having a live image of the services used at the node which allows a very quick and efficient troubleshooting.

According to another example, the result of the method can also be used to optimize the at least one determined service. Indeed, a key focus of service optimization is to make customers happy by satisfying their individual requirement. The overview of the services used at the node obtained thanks to the method is useful to improve one of these services. It allows make technological choice for the development of the services.

According to another example, the result of the method can also be used to manage the communication network. Indeed, determining at least one service used at the node and even a plurality of services is useful when one wants to proactively identify performance issues, monitor security and segmentation, and accelerate troubleshooting.

Apparatus

Figure 10 is a block diagram depicting the apparatus 1200 operating in accordance with an example embodiment described above, i.e. implementing the example embodiment. The apparatus 1200 may be, for example, an electronic device such as a chip, chip-set, an electronic device or an access network controller. The apparatus 1200 includes a processor 1110 and a memory 1160. In other examples, the apparatus 1200 may comprise multiple processors.

In the example of Figure X, the processor 1110 is a control unit operatively connected to read from and write to the memory 1160. The processor 1110 may also be configured to receive control signals received via an input interface and/or the processor 1110 may be configured to output control signals via an output interface. In an example embodiment the processor 1110 may be configured to convert the received control signals into appropriate commands for controlling functionalities of the apparatus.

The memory 1160 stores computer program instructions 1120 which when loaded into the processor 1110 control the operation of the apparatus 1200 according to the different embodiments explained above. In other examples, the apparatus 1200 may comprise more than one memory 1160 or different kinds of storage devices.

Computer program instructions 1120 for enabling implementations of example embodiments of the invention or a part of such computer program instructions may be loaded onto the apparatus 1200 by the manufacturer of the apparatus 1200, by a user of the apparatus 1200, or by the apparatus 1200 itself based on a download program, or the instructions can be pushed to the apparatus 1200 by an external device. The computer program instructions may arrive at the apparatus 200 via an electromagnetic carrier signal or be copied from a physical entity such as a computer program product, a memory device or a record medium such as a Compact Disc (CD), a Compact Disc Read- Only Memory (CDROM), a Digital Versatile Disk (DVD) or a Blu-ray disk.

According to an example embodiment, the apparatus 1200 comprises means, wherein the means comprises at least one processor 1110, at least one memory 1160 including computer program code 1120, the at least one memory 1160 and the computer program code 1120 configured to, with the at least one processor 1110, cause the performance of the apparatus 1200.

Embodiments of the present invention may be implemented in software, hardware, application logic or a combination of software, hardware and application logic. The software, application logic and/or hardware may reside on the apparatus, a separate device or a plurality of devices. If desired, part of the software, application logic and/or hardware may reside on the apparatus, part of the software, application logic and/or hardware may reside on a separate device, and part of the software, application logic and/or hardware may reside on a plurality of devices. In an example embodiment, the application logic, software or an instruction set is maintained on any one of various conventional computer-readable media. In the context of this document, a 'computer-readable medium' may be any media or means that can contain, store, communicate, propagate or transport the instructions for use by or in connection with an instruction execution system, apparatus, or device, such as a computer, with an example of a computer described and depicted in Figure 8. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It will be obvious to a person skilled in the art that, as the technology advances, the inventive concept can be implemented in various ways. The invention and its embodiments are not limited to the examples described above but may vary within the scope of the claims.

**Claims**

1. A method for determining a plurality of services used at a node of communication network, during a period of interest, the method comprising:

   - Selecting the period of interest within a collecting period,

     wherein the collecting period comprises a plurality of sub-periods,

   wherein the period of interest consisting of at least one of said sub-periods;

   - Determining a plurality of services used at the node, during the period of interest, by implementing a service determination model on a plurality of inputs, the plurality of inputs comprising:

     ∘ a downstream traffic volume received by the node during the period of interest and an upstream traffic volume sent by the node during the period of interest;
     ∘ p downstream traffic volumes received by the node during each of p sub-periods preceding the period of interest and p upstream traffic volumes sent by the node during said each of p sub-periods preceding the period of interest;
     wherein p is a positive integer number;
     the service determination model being a trained model comprising at least one machine learning sequence-to-sequence prediction model,
     wherein the service determination model has been trained to determine a plurality of target services used at the node during a training period of interest.

2. Method according to the preceding claim wherein the service determination model is a trained model comprising at least one Compact Convolutional Transformer.

3. Method according to any one of the preceding claims wherein:

   - the plurality of inputs further comprises a service request designating a service useable at the node, and
   - determining the plurality of services used at the node comprises outputting an indication of use of the service designated in the service request;

   wherein the plurality of target services comprises designated target service designated in a training service request.

4. Method according to any of the preceding claims wherein:

   - determining the plurality of services used at the node comprises determining a main service ; the main service being a service generating a highest traffic among a plurality of services useable at the node;

   wherein the plurality of target service comprises a main target service used at the node during the training period of interest.

5. Method according to any of the preceding claims wherein:

- determining the plurality of services used at the node further comprises outputting an indication of traffic volume generated by each service of the plurality of services,

the service determination model being trained to determine the traffic volume generated by each target service of the plurality of target services used at the node during the training period of interest.

6. Method according to any of the preceding claims wherein the plurality of inputs further comprises:

- f downstream traffic volumes received by the node during each of f sub-periods following the period of interest and f upstream traffic volumes sent by the node during said each of f sub-periods following the period of interest; wherein f is a positive integer number.

7. Method according to any of the preceding claims wherein the service determination model has been trained to determine the plurality of target services used at the node, for a plurality of training periods of interest, based on a plurality of training inputs;

wherein, for a first of two parts of the plurality of training periods of interest, the plurality of training inputs comprises:

- p training downstream traffic volumes received by the node during each of p training sub-periods preceding the training periods of interest of the first part of the plurality of training periods of interest and p upstream traffic volumes sent by the node during said each of p training sub-periods preceding the training periods of interest of the first part of the plurality of training periods of interest;
- f training downstream traffic volumes received by the node during each of f training sub-periods following the training periods of interest of the first part of the plurality of training periods of interest and f upstream traffic volumes sent by the node during said each of p training sub-periods following the training periods of interest of the first part of the plurality of training periods of interest;

wherein, for a second of the two parts of the plurality of training period of interest, the plurality of training inputs only comprises:

- training downstream traffic volume and training upstream traffic volume received and sent during the number p of training sub-periods, each one of the p training sub-periods preceding the training periods of interest of the second part of the plurality of training periods of interest;

wherein the period of interest is equal in length to the training period of interest.

8. Method according to any of the preceding claims comprising:

- Iterating the selecting and the determining from a first to a last sub-period of the collecting period according to a chronological order.

9. Method according to the preceding claim wherein each one of the sub-periods is part of only one period of interest.

10. Method according to claim 9 wherein:

- the collecting comprises a number of sub-periods superior to p,
- the first sub-period comprised in a selected period of interest among the collecting period is a sub-period directly following, according to a chronological order, the p-th sub-period of the collecting period.

11. Method according to any of the preceding claims wherein the downstream traffic volume and the upstream traffic volume received and sent during the plurality of sub-periods of the collecting period are measured, for each sub-period, by one or more downstream counters and one or more upstream counters;

a downstream counter measuring a downstream traffic received at the node during a measuring time,
a upstream counter measuring a upstream traffic sent from the node during the measuring time.

12. Method according to any of the preceding claims further comprising:

∘ Analyzing and/or reporting of the activity of one or a plurality of nodes of the communication network based on at least one determined service during the determination step,
∘ Troubleshooting one or a plurality of nodes of the communication network based on at least one determined service during the determination step,

◦ managing one or a plurality of nodes of the communication network based on at least one determined service during the determination step, and/or
◦ optimizing a service used at one or a plurality of nodes of the communication network based on at least one determined service during the determination step.

13. Apparatus for determining a plurality of services used at a node of communication network, during a period of interest, the apparatus comprising means for:

- Selecting the period of interest among a collecting period,

wherein the collecting period comprises a plurality of sub-periods,
wherein the period of interest comprising at least one sub-period;

- Determining a plurality of services used at the node, during the period of interest, by implementing a service determination model on a plurality of inputs, the plurality of inputs comprising:

◦ downstream traffic volume and upstream traffic volume received and sent during the at least one sub-period of the period of interest;
◦ downstream traffic volume and upstream traffic volume received and sent during a number p of sub-periods, each one of the p sub-periods preceding the period of interest;

wherein the number p is a positive integer;
the service determination model being a trained model based on at least one ML sequence-to-sequence prediction model,
wherein the service determination model has been trained to determine the plurality of service used at the node during the period of interest.

14. A computer program comprising instructions for causing an apparatus to perform:

- Selecting the period of interest within a collecting period,

wherein the collecting period comprises a plurality of sub-periods,
wherein the period of interest consisting of at least one of said sub-periods;

- Determining a plurality of services used at the node, during the period of interest, by implementing a service determination model on a plurality of inputs, the plurality of inputs comprising:

◦ a downstream traffic volume received by the node during the period of interest and an upstream traffic volume sent by the node during the period of interest;
◦ p downstream traffic volumes received by the node during each of p sub-periods preceding the period of interest and p upstream traffic volumes sent by the node during said each of p sub-periods preceding the period of interest;

wherein p is a positive integer number;
the service determination model being a trained model comprising at least one machine learning sequence-to-sequence prediction model,
wherein the service determination model has been trained to determine a plurality of target services used at the node during a training period of interest.

[Fig. 1]

[Fig. 2]

```
┌─────────────────────────────┐
│          INPUTS             │────── 200
│      ds_Total, us_Total     │
└─────────────────────────────┘
               │
               ▼
┌─────────────────────────────┐
│        Preprocessing        │────── 201
└─────────────────────────────┘
               │
               ▼
┌─────────────────────────────┐
│     Sequence-to-sequence    │────── 202
│       prediction model      │
└─────────────────────────────┘
               │
               ▼
┌─────────────────────────────┐
│       Postprocessing        │────── 203
└─────────────────────────────┘
               │
               ▼
┌─────────────────────────────┐
│          OUTPUTS            │────── 204
│       ds_service [1:9]      │
└─────────────────────────────┘
```

[Fig. 4]

[Fig. 3]

[Fig. 5]

[Fig. 6]

[Fig. 7]

[Fig. 10]

[Fig. 8]

[Fig. 9]

EP 4 561 006 A1

Europäisches
Patentamt

European
Patent Office

Office européen
des brevets

# EUROPEAN SEARCH REPORT

**Application Number**

EP 24 21 2394

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/087069 A1 (CANOPUS NETWORKS PTY LTD [AU]) 25 May 2023 (2023-05-25) * page 1, line 2 - page 23, line 21; figures 2-10 * | 1,2,4-14 | INV. H04L41/16 H04L43/026 ADD. H04L43/065 H04L43/0876 |
| X | US 2023/164043 A1 (SIROV DENIS [IL] ET AL) 25 May 2023 (2023-05-25) * paragraph [0002] - paragraph [0141]; figures 1-4B * | 1-5,7, 11,12 | |
| X | EP 4 152 725 A1 (SREEVALSAN SHYAM [IN] ET AL) 22 March 2023 (2023-03-22) * paragraph [0002] - paragraph [0076]; figures 1-5 * | 1,2, 4-10, 12-14 | |
| X | US 2023/216760 A1 (NGUYEN KHUONG N [US] ET AL) 6 July 2023 (2023-07-06) * paragraph [0002] - paragraph [0141]; figures 3-22 * | 1,2, 4-10, 12-14 | |

-/--

**TECHNICAL FIELDS SEARCHED (IPC)**

H04L

The present search report has been drawn up for all claims

| Place of search | Date of completion of the search | Examiner |
|---|---|---|
| Munich | 14 March 2025 | Lupia, Sergio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................
& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 24 21 2394

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DIERICKX PHILIPPE ET AL: "Comparison Between CNN, ViT and CCT for Channel Frequency Response Interpretation and Application to G.Fast", IEEE ACCESS, [Online] vol. 11, 14 March 2023 (2023-03-14), pages 24039-24052, XP093229978, USA ISSN: 2169-3536, DOI: 10.1109/ACCESS.2023.3247877 Retrieved from the Internet: URL:https://ieeexplore.ieee.org/ielx7/6287 639/10005208/10050025.pdf?tp=&arnumber=100 50025&isnumber=10005208&ref=aHR0cHM6Ly9pZW VleHBsb3JlLmllZWUub3JnL2RvY3VtZW50LzEwMDUw MDI1> [retrieved on 2025-03-12] * page 24039, left-hand column, line 1 - page 24052, left-hand column, line 2 * | 1-14 | |

TECHNICAL FIELDS
SEARCHED      (IPC)

The present search report has been drawn up for all claims

| Place of search | Date of completion of the search | Examiner |
|---|---|---|
| Munich | 14 March 2025 | Lupia, Sergio |

EPO FORM 1503 03.82 (P04C01)

## ANNEX TO THE EUROPEAN SEARCH REPORT
## ON EUROPEAN PATENT APPLICATION NO.

EP 24 21 2394

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2025

| Patent document cited in search report | | Publication date | Patent family member(s) | | Publication date |
|---|---|---|---|---|---|
| WO 2023087069 | A1 | 25-05-2023 | AU | 2022391773 A1 | 23-05-2024 |
| | | | CA | 3237448 A1 | 25-05-2023 |
| | | | EP | 4433918 A1 | 25-09-2024 |
| | | | US | 2025016107 A1 | 09-01-2025 |
| | | | WO | 2023087069 A1 | 25-05-2023 |
| US 2023164043 | A1 | 25-05-2023 | NONE | | |
| EP 4152725 | A1 | 22-03-2023 | CA | 3174229 A1 | 17-03-2023 |
| | | | EP | 4152725 A1 | 22-03-2023 |
| | | | US | 2023092372 A1 | 23-03-2023 |
| US 2023216760 | A1 | 06-07-2023 | NONE | | |

EPO FORM P0459

For more details about this annex : see Official Journal of the European Patent Office, No. 12/82